Europäisches Patentamt

European Patent Office

Office européen des brevets

(19)

(11) Numéro de publication : **0 300 890 B1**

(12) **FASCICULE DE BREVET EUROPEEN**

(45) Date de publication du fascicule du brevet :
02.01.92 Bulletin 92/01

(51) Int. Cl.⁵ : **F16D 1/10,** B62D 1/16

(21) Numéro de dépôt : **88401858.1**

(22) Date de dépôt : **18.07.88**

(54) **Liaison rapide entre deux arbres ou analogues.**

(30) Priorité : **20.07.87 FR 8710238**
**11.02.88 FR 8801651**

(43) Date de publication de la demande :
**25.01.89 Bulletin 89/04**

(45) Mention de la délivrance du brevet :
**02.01.92 Bulletin 92/01**

(84) Etats contractants désignés :
**BE DE ES GB IT NL SE**

(56) Documents cités :
**EP-A- 0 092 669**
**EP-A- 0 201 464**
**DE-A- 2 032 441**
**DE-B- 2 805 919**
**DE-C- 937 084**
**DE-C- 3 408 857**
**GB-A- 2 131 915**
**US-A- 1 552 343**
**US-A- 4 430 066**
**US-A- 4 492 292**

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Hoblingre, André
28, rue Vincent d'Indy
F-25700 Valentigney (FR)**
Inventeur : **Barnabe, Jean-Pierre
17, Combe Saint Germain
F-25700 Valentigney (FR)**
Inventeur : **Mouhot, Frédéric
5, Rue des Vergers
F-25420 Voujeaucourt (FR)**

(74) Mandataire : **Habasque, Etienne Joel
Jean-François et al
Cabinet Lavoix 2, Place d'Estienne d'Orves
F-75441 Paris Cédex 09 (FR)**

Jouve, 18, rue Saint-Denis, 75001 PARIS

Description

Il est bien connu que l'assemblage de deux arbres, ou analogues, qui doivent être solidaires à la fois axialement et en rotation, exige non seulement une grande précision de montage mais également l'absence de tout jeu angulaire ou axial.

Cet assemblage est généralement effectué au moyen d'organes simples tels que des systèmes vis-écrou mais ceux-ci doivent être placés dans des endroits bien déterminés et serrés de manière suffisante, ce qui pose des problèmes lorsque que l'accès à la jonction des deux organes à assembler est peu commode, par exemple lorsque dans un véhicule automobile, on doit monter une fourchette de cardan à l'extrémité de la queue d'un pignon de boîtier de direction, ou assurer la liaison d'un volant et d'un axe de volant.

On connaît d'après les documents EP-A-092669 et US-A-4492292 des liaisons rapides entre deux arbres ou analogues, qui sont utilisées dans des mécanismes de transmission de puissance à partir par exemple de prises de force de tracteurs.

Cependant, ces liaisons présentent un certain nombre d'inconvénients au niveau de leur encombrement important, de leur structure relativement complexe et des jeux subsistant après connexion des deux arbres, dans la mesure où ces liaisons sont conçues pour transmettre de la puissance et non pour assurer une transmission précise d'un mouvement de rotation.

La présente invention a pour but de remédier à ces inconvénients en fournissant une liaison rapide qui permette d'accoupler deux arbres, ou autres pièces analogues, par une simple manoeuvre d'emboîtement ne nécessitant aucune précision particulière et facile à réaliser dans un minimum de place.

Cette invention a en effet pour objet une liaison rapide entre deux arbres dont l'un est terminé par une douille creuse et l'autre par une queue allongée, dans laquelle la douille comporte d'une part une noix intérieure fixe, ayant des faces internes inclinées de coopération avec des faces correspondantes d'une tête pyramidale de la queue, et d'autre part des pions de verrouillage axial, traversant la paroi de la douille, sollicités élastiquement vers l'intérieur de cette dernière, mais retenus dans cette paroi tant que la douille est vide, par des moyens de retenue escamotables et en ce que la queue comporte au voisinage de sa tête pyramidale des moyens d'escamotage des moyens de retenue pour débloquer les pions et des encoches de réception de ces pions dans leur position de verrouillage axial des deux arbres l'un par rapport à l'autre.

La coopération des faces internes de la noix d'entraînement avec la tête pyramidale de la queue rend cette dernière totalement solidaire en rotation de la douille. En même temps les deux organes sont immobilisés axialement l'un par rapport à l'autre par les pions de verrouillage et les encoches dans lesquelles ils ont pénétrés. Or, ces différents moyens d'immobilisation sont immédiatement mis en place par la pénétration de la queue d'un arbre à l'intérieur de la douille de l'autre.

Selon une autre caractéristique de l'invention, une bague conique de verrouillage susceptible de coulisser sur la douille sous l'action d'un ressort appuie de manière constante sur l'extrémité extérieure des pions.

Aucun risque de recul des pions vers l'extérieur ni par suite de séparation des deux organes assemblés n'est donc à craindre.

La description ci-dessous d'un mode de réalisation, donné à titre d'exemple non limitatif et représenté aux dessins annexé, fera d'ailleurs ressortir les avantages et caractéristiques de l'invention.

Sur ces dessins

— la Fig. 1 est une vue en coupe longitudinale d'une liaison rapide selon l'invention avant son assemblage complet,

— la Fig. 2 est une vue analogue à la Fig. 1 de la liaison rapide complètement engagée,

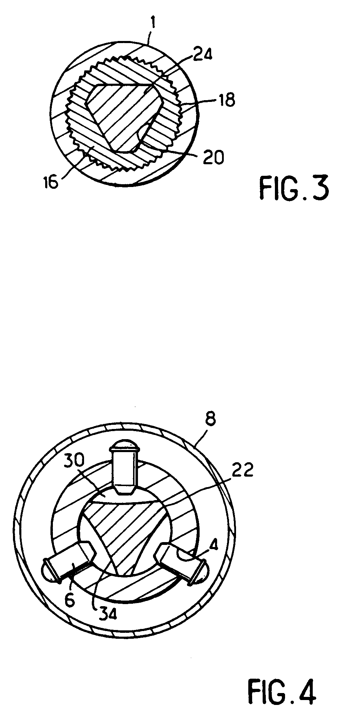

— la Fig. 3 est une vue en coupe suivant la ligne 3-3 de la Fig. 2,

— la Fig. 4 est une vue en coupe suivant la ligne 4-4 de la Fig. 2,

— la Fig. 5 est une vue en coupe longitudinale d'un autre mode de réalisation de l'invention,

— la Fig. 6 est une vue en coupe longitudinale d'une liaison rapide complètement engagée, selon une variante de réalisation,

— la Fig. 7 est une vue partielle en élévation de la liaison rapide de la Fig. 6, le ressort ayant été enlevé,

— la Fig. 8 est une vue en perspective de la douille, la bague tronconique étant dans une position intermédiaire de début de déverrouillage,

— la Fig. 9 est une vue partielle en coupe longitudinale de la liaison rapide avec la bague dans la position représentée sur la Fig. 7,

— la Fig. 10 est une analogue à la Fig. 8 montrant la bague tronconique en position intermédiaire,

— la Fig. 11 est une vue partielle en coupe longitudinale de la liaison rapide libérée,

— la Fig. 12 est une vue analogue à la Fig. 8 montrant la bague tronconique dans la position de libération de la liaison rapide.

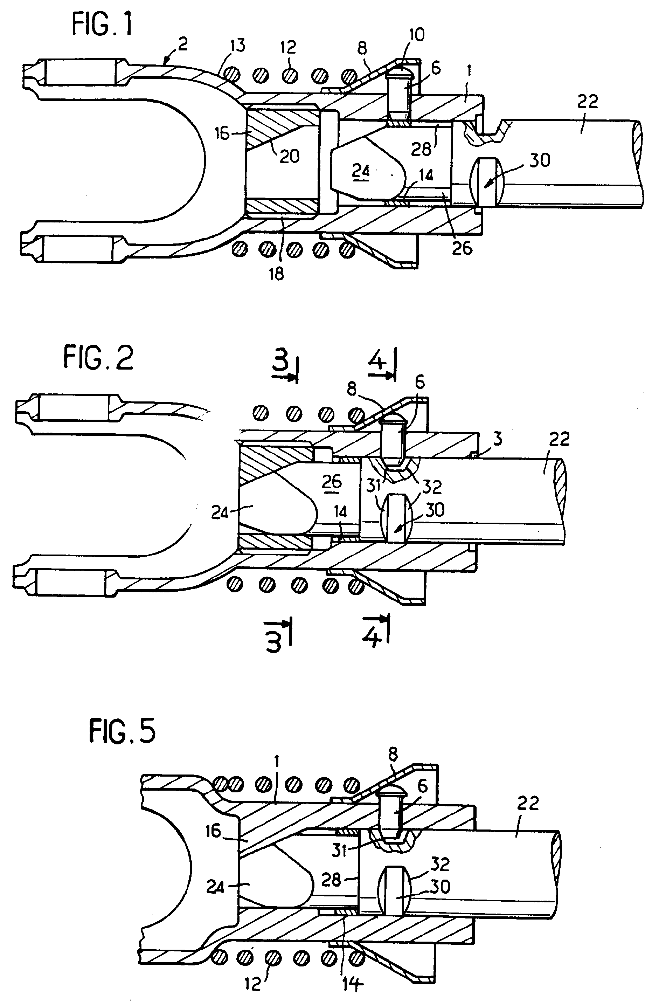

Les figures 1 et 2 représentent une liaison rapide reliant deux arbres dont l'un est muni d'une fourchette de cardan, mais il apparaîtra clairement que ceci n'est donné qu'à titre d'exemple et que la liaison rapide, objet de l'invention peut servir à relier entre eux deux arbres quelconques ou même d'autres pièces.

L'arbre 1 terminé par une fourchette de cardan 2 est creux et forme une douille sensiblement cylindrique ouverte à son extrémité 3 et percée de plusieurs trous 4, trois dans l'exemple de réalisation représenté, qui sont régulièrement espacés sur sa circonférence. Dans chacun de ces trous 4 est monté un pion de verrouillage 6 qui traverse de part en part la paroi de la douille. Les pions 6 sont tous repoussés vers la douille par une bague tronconique 8 dont la grande base appuie sur leur tête 10 tandis que sa petite base repose sur la surface extérieure de la douille 1 et peut coulisser par rapport à celle-ci. Un ressort hélicoïdal 12 est monté entre cette bague 8 et un bossage 13 de la douille 1, qui dans le mode de réalisation représenté est formé par les branches mêmes de la fourchette, et tend à repousser la bague 8 vers l'extrémité opposée de la douille 1. Cet effort du ressort 12 est toutefois contrecarré par une bague interne circulaire 14 qui est montée à l'intérieur de la douille de façon à fermer les orifices 4 et contre laquelle butent les pions 6.

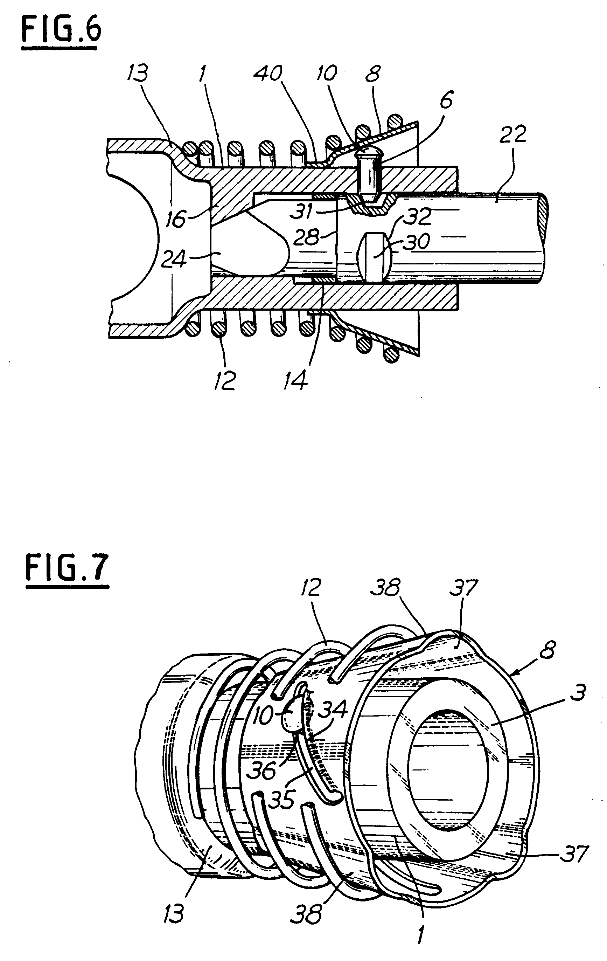

La douille 1 contient en outre une noix d'entraînement 16 qui dans l'exemple de réalisation représenté est fixée sur elle par l'intermédiaire de cannelures 18 mais pourrait lui être assemblée par tout autre moyen ou même être d'une seule pièce avec elle, comme le montre la Fig. 5. La surface interne de la noix d'entraînement 16 comporte un certain nombre de faces inclinées 20 délimitant sensiblement un tronc de pyramide dont la grande base est située au voisinage de la bague interne 14, tandis que sa petite base est dirigée vers les branches de la fourche de cardan.

Le second arbre à assembler comporte lui une queue allongée 22 de forme sensiblement cylindrique ou prismatique qui est terminée par une tête pyramidale 24 ayant le même nombre de faces que le tronc de pyramide de la noix 16. La tête pyramidale 24 est reliée au corps de la queue 2 par l'intermédiaire d'une portion rectiligne 26 formant avec le corps 22 un épaulement extérieur 28.

Au-delà de cet épaulement 28 le corps 22 comporte plusieurs encoches 30 occupant chacune une portion de sa circonférence. Ces encoches sont délimitées axialement par des flancs 31 et 32 inclinés en sens inverse de sorte qu'elles s'évasent vers l'extérieur.

Lorsque l'on veut assembler entre elles les arbres ou pièces 1 et 22, il suffit d'introduire la tête 24 de la queue 22 à l'intérieur de la douille 1. Comme le montre la Fig. 1 la portion cylindrique 26 de cette tête passe à l'intérieur de la bague 14, mais l'épaulement 28 vient buter contre cette bague et l'entraîne en direction de la noix 16. Ce déplacement ouvre les orifices 4 de la douille et amène les encoches 30 en regard des pions 6 qui sont immédiatement poussés à l'intérieur de ces encoches par la bague tronconique 8 qui est repoussée le long de la douille 1 par le ressort 12. Les pions 6 sont ainsi rigoureusement immobilisés par rapport à la queue 22 par l'action conjuguée de la bague conique 8, repoussée vers l'extrémité ouverte de la douille 1 par le ressort 12, et de la paroi latérale 31 des encoches. Aucun déplacement axial relatif de ces deux organes n'est donc possible.

Pendant que l'épaulement 28 entraînait la bague interne de retenue 14, la tête 24 a pénétré à l'intérieur de la noix 16, chacune de ses faces venant s'appliquer contre l'une des faces 20 de cette noix. La tête 24 et la noix d'entraînement 16 sont donc rigoureusement solidaires en rotation. Par suite, lorsqu'ils sont dans la position complètement engagée représentée sur la Fig. 2, les arbres 1 et 22 sont rigoureusement solidaires à la fois en rotation et axialement, sans jeu angulaire ni axial. En effet, les pions 6 poussent fermement la queue 22 contre les faces 20 au fond de la noix 16 par l'intermédiaire des pentes 31 et rattrapent ainsi les jeux.

La liaison entre ces deux arbres a été obtenue par une simple manoeuvre d'emboîtement de la queue 22 dans la douille 1 sans qu'il soit nécessaire de présenter l'un à l'autre ces organes dans une position précise déterminée. En effet, la longueur périphérique des encoches 3 est telle que la pénétration des pions 6 dans ces encoches s'effectue de manière sûre et risque tout au plus d'exiger un très léger déplacement angulaire dans un sens ou dans l'autre. D'une façon générale ce déplacement angulaire est d'ailleurs provoqué par le centrage des faces 24 de la tête pyramidale à l'intérieur de la noix 16, centrage qui s'effectue automatiquement lors de l'emboîtement de ces deux organes.

La liaison rapide ci-dessus peut donc être établie sans aucune précision, par une main d'oeuvre non qualifiée et même au moyen d'un système automatique tel qu'un robot, et est particulièrement adaptée pour l'assemblage d'arbres ou analogues en des points où ils sont difficilement accessibles.

En outre elle permet une transmission sans jeu ni angulaire ni axial entre les arbres et assurant automatiquement le rattrapage de tout jeu éventuel que ce soit au montage ou en utilisation. Elle est ainsi particulièrement bien adaptée à la réalisation des colonnes de direction.

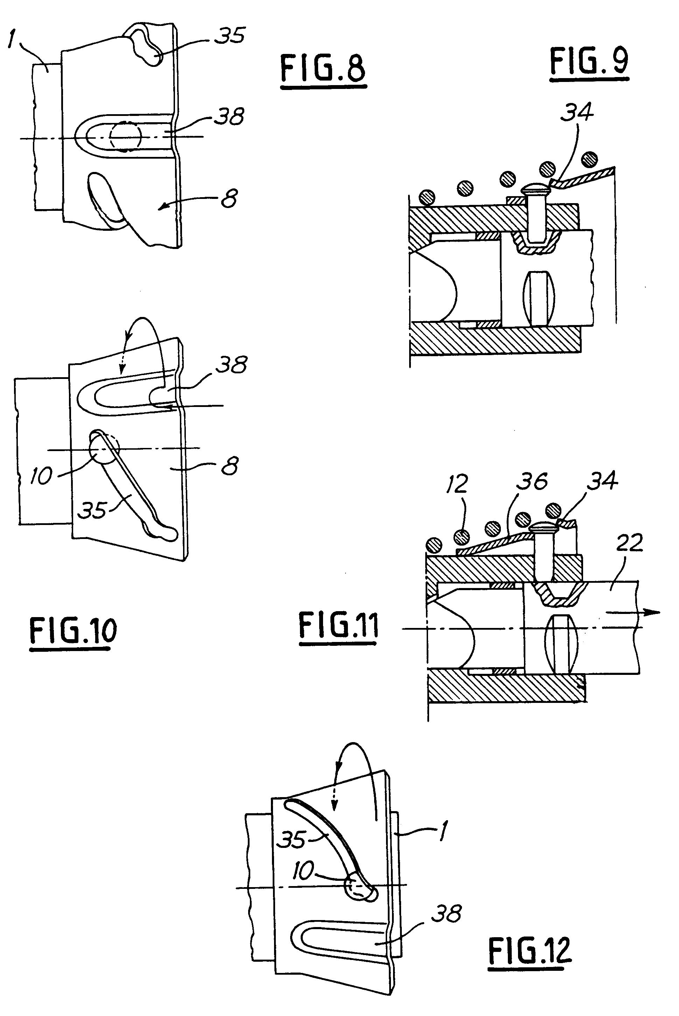

Selon une variante de réalisation représentée sur les Fig. 6 à 12, la bague 8 comporte, pour chacun des pions 6, une rampe hélicoïdale 35 formée par une fente dont les bords longitudinaux supérieur 34 et inférieur 36 sont légèrement repliés en sens inverses: le bord supérieur 34 vers l'extérieur pour former un angle obtus avec le reste de la paroi de la bague 8 et le bord inférieur 36 vers l'intérieur pour constituer une voie de glissement sensiblement parallèle à la surface extérieure de la douille 1. La distance entre ces deux rebords 34 et 36 est telle qu'ils peuvent s'emboîter de part et d'autre de la tête 10 d'un pion 6, comme le montrent les Fig. 9 et 11, le rebord inférieur 36 étant glissé sous la tête 10 tandis que le rebord 34 appuie sur cette tête.

Lorsque les rampes 35 sont ainsi emboîtées sur les pions 6 et notamment lorsque, comme le montrent les figures 7 à 10, les extrémités des fentes 35 voisines de la petite base 40 de la bague 8 sont emboîtées sur les pions, une rotation de la bague 8 dans le sens indiqué par les flèches F sur les figures 10 et 12 en déplaçant ces fentes 35 provoquent un déplacement radial des pions 6 par rapport à la douille 1. En effet du fait de la conicité de la bague 8, chaque rebord inférieur 36 soulève progressivement la tête 10 du pion 6 correspondant tandis que ce pion est maintenu rigoureusement parallèle à lui même par l'action du rebord supérieur 34. La bague tronconique 8 passe ainsi de la position représentée sur les figures 7 à 10 où les pions 6 assurent le verrouillage, à la position représentée sur les figures 11 et 12 dans laquelle les pions 6 sont complètement retirés de l'évidement de la douille 1, c'est-à-dire des encoches 30 de la queue allongée 22. Dans cette position la liaison rapide est libérée, la queue allongée 22 peut être retirée de la douille 1 par un simple déplacement axial.

De préférence, pour assurer un blocage ferme des pions 6 et faciliter leur centrage, la paroi de la bague 8 est en outre déformée en regard de chacun de ces pions et délimite une rainure interne longitudinale 37 qui constitue un bossage extérieur 38. Ce bossage qui part de la grande base de la bague 8 s'étend jusqu'à la petite base, cette dernière étant toutefois prolongée par un anneau cylindrique 40 coulissant sur la douille 1. A cette extrémité chacune des rainures 37 est voisine d'une rampe hélicoïdale 35.

En utilisation normale de la liaison rapide, les pions 6 ne sont pas emboîtés dans les fentes 35 mais bloqués à l'intérieur des rainures longitudinales 37 le plus souvent en un point intermédiaire de leur longueur, comme le montre la Fig. 6. La libération de la liaison rapide suppose donc que l'on exerce sur la bague tronconique 8 un effort axial en direction de l'extrémité ouverte 3 de la douille, qui vient s'ajouter à l'effort exercé normalement par le ressort 12 et déplace cette bague 8 jusqu'au moment où la tête 10 de chacun des pions 6 se trouve à l'extrémité de la rainure de blocage 37. A ce moment une rotation de la bague 8 autour de la douille 1 dans le sens de la flèche F des figures 10 et 12, c'est-à-dire dans le sens des aiguilles d'une montre en regardant la Fig. 6, écarte chaque bossage 38 de la tête 10 du pion 6 correspondant et place l'extrémité de la fente 35 en regard de ce même pion, de sorte que les bords 34 et 36 de cette fente s'engagent de part et d'autre de la tête 10 dans la position représentée sur les figures 9 et 10.

La poursuite de la rotation de la bague tronconique 8 fait alors glisser la fente 35 sur le pion 6, ce qui repousse la bague tronconique 8 en direction du bossage 13 de la douille 1 contre l'action du ressort 12. La fente hélicoïdale 35 étant percée dans la paroi tronconique de cette bague 8, son point de contact avec le pion 6 s'éloigne progressivement de la douille 1 au fur et à mesure de la rotation, de sorte que le bord inférieur 36 tire la tête 10 et déplace le pion 6 radialement par rapport à la douille 1. Par suite lorsque l'extrémité de la fente 35 vient buter contre ce pion 6 celui-ci est entièrement escamoté à l'intérieur de la paroi de la douille 1 et est sorti de l'encoche 30 correspondante. La queue allongée 22 est alors libre, le verrouillage étant supprimé, et cette queue 22 peut être retirée de la douille 1 par un simple déplacement axial.

Les pions de verrouillage 6, sont de préférence retenus à cette extrémité de la fente 35 dans un décrochement de blocage 42. Ils peuvent ainsi rester escamotés à l'intérieur de la douille 1 le temps nécessaire.

Lorsque les pièces 1 et 22 doivent à nouveau être assemblées, la queue allongée 22 est introduite à l'intérieur de la douille 1 jusqu'au moment où les encoches 30 se trouvent à nouveau en regard des pions 6. Il suffit alors d'un effort axial sur la bague 8 contre l'action du ressort 12 pour dégager le pion du décrochement 42 et permettre le coulissement des bords de la fente 35 sur ce pion. Ceci permet à l'action du ressort 12 de se combiner avec celle des bords de la fente 35 pour repousser la bague 8 vers l'extérieur et les pions vers l'intérieur de la douille 1 jusqu'au moment où ils reprennent la position représentée sur la Fig. 9, c'est-à-dire la position dans laquelle les pions 6 repoussés à travers la paroi de la douille 1 ont pénétré à l'intérieur des encoches 30 de la queue 22. La bague tronconique 8 est dans sa position la plus extérieure. Une simple rotation de cette bague, en sens inverse de la flèche F, peut ensuite dégager les fentes 35 des têtes 10 et placer en regard de ces derniers les rainures 37, ce qui permet à la bague tronconique 8 de coulisser axialement le long de la douille 1 et de prendre ainsi la position la plus appropriée pour assurer un verrouillage efficace de la queue allongée 22, et assure un blocage latéral de la bague tronconique 8 et des pions de verrouillage 6.

La liaison rapide peut donc être démontée puis remise en place chaque fois qu'on le désire par des manoeuvres extrèmement simples qui peuvent facilement être exécutées sans précision particulière, même si les pièces à assembler sont situées en un emplacement difficilement accessible. Ce démontage, de même que l'assemblage de la liaison, peut entre autres être commandé à distance.

**Revendications**

1. Liaison rapide entre deux arbres ou analogues, dont l'un est terminé par une douille creuse cylindrique (1) et l'autre par une queue allongée (22) cylindrique, caractérisée en ce que la douille (1) comporte, d'une part, une noix intérieure fixe (16), ayant des faces internes (20) inclinées de coopération avec des faces correspondantes d'une tête pyramidale (24) d'extrémité de la queue (22), et d'autre part, des pions de verrouillage axial (6), traversant la paroi de la douille, sollicités élastiquement vers l'intérieur de cette dernière, mais retenus dans cette paroi tant que la douille est vide, par des moyens de retenue escamotables et en ce que la queue (22) comporte au voisinage de sa tête pyramidale (24) des moyens (28) d'escamotage des moyens de retenue pour débloquer les pions et des encoches (30) de réception de ces pions dans leur position de verrouillage axial des deux arbres l'un par rapport à l'autre pour assurer une liaison sans jeu angulaire ni axial.

2. Liaison rapide suivant la revendication 1, caractérisée en ce qu'une bague tronconique (8) coulisse sur la douille sous l'action d'un ressort (12) et appuie sur l'extrémité extérieure des pions (6).

3. Liaison rapide suivant l'une des revendications 1 et 2, caractérisée en ce qu'elle comporte une bague interne (14) de retenue des pions en position extérieure qui est susceptible de coulisser à l'intérieur de la douille (2).

4. Liaison interne suivant la revendication 3, caractérisée en ce que la queue (22) comporte un épaulement externe (28) de butée et d'entraînement de la bague interne coulissante (14).

5. Liaison interne suivant l'une des revendications précédentes, caractérisée en ce que la queue allongée (22) comporte un certain nombre d'encoches circonférentielles (30) de réception chacune de l'un des pions (6) en position de blocage et de rattrapage de jeu axial et angulaire.

6. Liaison rapide suivant l'une des revendications 1 à 5, caractérisée en ce que la noix d'entraînement (16) est rendue solidaire de la douille (1) par des cannelures (18).

7. Liaison rapide suivant l'une des revendications 1 à 6, caractérisée en ce que la noix (16) est d'une seule pièce avec la douille (2).

8. Liaison rapide suivant l'une des revendications précédentes, caractérisée en ce que les faces internes inclinées (20) de la noix d'entraînement (16) forment un tronc de pyramide à base triangulaire, la tête pyramidale (24) de la queue (22) ayant également une base sensiblement triangulaire.

9. Liaison rapide suivant l'une des revendications précédentes, caractérisée en ce que la bague tronconique (8) est libre en rotation par rapport à la douille (1) et comporte dans sa paroi, pour chaque pion de verrouillage, une rampe hélicoïdale (35) susceptible de s'emboîter sur la tête (10) du pion correspondant de sorte qu'elle déplace radialement ce pion par rapport aux encoches (30) de la queue allongée (22) lors d'une rotation de la bague (8).

10. Liaison rapide selon la revendication 9, caractérisée en ce que chaque rampe hélicoïdale (35) est formée par une fente de la paroi de la bague tronconique (8) dont les bords longitudinaux (34 et 36) sont légèrement repliés en sens inverses et susceptibles de glisser respectivement sous et sur la tête d'un pion (6) de verrouillage.

11. Liaison rapide suivant l'une des revendications 9 et 10, caractérisée en ce que la paroi de la bague tronconique (8) forme en regard de chacun des pions de verrouillage une rainure longitudinale de blocage (37).

12. Liaison rapide suivant la revendication 11, caractérisée en ce que la rainure de blocage (36) se termine à proximité de la petite base de la bague qui est prolongée par un anneau cylindrique (40).

13. Liaison rapide suivant l'une des revendications 11 et 12, caractérisée en ce que chacune des rampes hélicoïdales (35) est ménagée dans l'espace (10) qui sépare les rainures (37) de blocage des pions, son extrémité voisine de la petite base (40) de la bague tronconique étant également proche de l'extrémité correspondante de l'une des rainures de blocage (37).

**Patentansprüche**

1. Schnellkupplung zwischen zwei Wellen oder dergl., deren eine an ihrem Ende eine hohle zylindrische Muffe (1) und deren andere an ihrem Ende einen zylindrischen Zapfen (22) besitzt, dadurch gekennzeichnet, daß die Muffe (1) einerseits einen feststehenden Innenkern (16) mit schrägen Innenflächen (20) zum Zusammenwirken mit entsprechenden Flächen eines pyramidenförmigen Kopfes (24) am Ende des Zapfens (22) und andererseits Bolzen (6) zur axialen Verriegelung besitzt, die die Wand der Muffe durchqueren und elastisch auf das Innere der Muffe zu beaufschlagt sind, jedoch in der wand durch wegrückbare Rückhalteeinrichtungen zurückgehalten sind, solange die Muffe leer ist, und daß der Zapfen (22) in Nähe seines pyramidenförmigen Topfes (24) Einrichtungen (28) zum Wegrücken der Rückhalteeinrichtungen zur Freigabe der Bolzen und Aussparungen (30) zur Aufnahme der Bolzen in ihrer Stillung besitzen, in der sie die beiden Wellen zueinander axial verriegeln, um eine Verbindung ohne Axial- und winkelspiel zu gewährleisten.

2. Schnellkupplung nach Anspruch 1, dadurch gekennzeichnet, daß ein kegelstumpfförmiger Ring (8) auf der Muffe unter der Einwirkung einer Feder (12) gleitet und auf dem Außenende der Bolzen (6) aufliegt.

3. Schnellkupplung nach einem der Ansprüche 1 und 2, gekennzeichnet durch einen Innenring (14) zum Zurückhalten der Bolzen in der äußeren Stellung, der im Inneren der Muffe (2) gleiten kann.

4. Schnellkupplung nach Anspruch 3, dadurch gekennzeichnet, daß der Zapfen (22) eine Außenschulter (28) besitzt, an der der verschiebbare Innenring (14) zum Anschlag kommt und von der er mitgenommen wird.

5. Schnellkupplung nach einem der vorhergehenden Ansprüche, dadurch gekennzeichnet, daß der Zapfen (22) eine gewisse Anzahl von auf dem Umfang verteilten Aussparungen (30) zur Aufnahme von jeweils einem der Bolzen (6) in der Stellung der Verriegelung und der Beseitigung des Axial- und Winkelspiels besitzt.

6. Schnellkupplung nach einem der Ansprüche 1 bis 5, dadurch gekenzeichnet, daß der Antriebskern (16) mit der Muffe (1) durch eine Verzahnung (18) fest verbunden ist.

7. Schnellkupplung nach einem der Ansprüche 1 bis 6, dadurch gekennzeichnet, daß der Kern (16) mit der Muffe (2) einstückig ausgebildet ist.

8. Schnellkupplung nach einem der vorhergehenden Ansprüche, dadurch gekennzeichnet, daß die schrägen Innenflächen (20) des Antriebskerns (16) einen Pyramidenstumpf mit dreieckiger Basis bilden, wobei der pyramidenförmige Kopf (24) dis Zapfens (22) ebenfalls eine im wesentlichen dreieckige Basis besitzt.

9. Schnellkupplung nach einem der vorhergehenden Ansprüche, dadurch gekennzeichnet, daß der kegelstumpfförmige Ring (8) sich bezüglich der Muffe (1) frei drehen kann und in seiner Maid für jeden Verriegelungsbolzen eine schraubenförmige Führung (35) besitzt, die über den Kopf (10) des entsprechenden Bolzens greifen kann, so daß sie den Bolzen bezüglich der Aussparungen (30) des Zapfens (22) bei einer Drehung des Rings (8) radial bewegt.

10. Schnellkupplung nach Anspruch 9, dadurch gekennzeichnet, daß jede schraubenförmige Führung (35) durch einen Schlitz in der Wand des kegelstumpfförmigen Rings (8) gebildet ist, dessen Längsränder (34 und 36) in entgegengesetzter Richtung leicht umgebogen sind und unter bzw. auf dem Kopf eines Verriegelungsbolzens (6) gleiten können,

11. Schnellkupplung nach einem der Ansprüche 9 und 10, dadurch gekennzeichnet, daß die Wand des kegelstumpfförmigen Ringes (8) gegenüber jedem Verriegelugsbolzen eine Blockierungslängsnut (37) bildet.

12. Schnellkupplung nach Anspruch 11, dadurch gekennzeichnet, daß die Blockierungsnut (36) in Nähe der kleinen Basis des Rings endet, der durch einen zylindrischen Ring (40) verlängert ist.

13. Schnellkupplung nach einem der Ansprüche 11 und 12, dadurch gekennzeichnet, daß jede der schraubenförmigen Führungen (35) in dem Raum zwischen den Nuten (37) zur Blockierung der Bolzen angeordnet ist, wobei ihr der kleinen Basis (40) der kegelstumpfförmigen Rings benachbartes Ende auch in der Nähe des entsprechenden Endes einer der Blockierungsnuten (37) liegt.

## Claims

1. A rapid connection between two shafts, or the like, one of which shafts terminates in a cylindrical hollow socket (1) whereas the other shaft terminates in a cylindrical elongated stem (22), characterised in that the socket (1) comprises, on the one hand, a fixed inner block (16) having inclined inner faces (20) for cooperation with corresponding faces of a pyramidal end head (24) of the stem (22), and, on the other hand, axial locking pins (6) extending through the wall of the socket and elastically pressed towards the interior thereof but retained in this wall by retractable retaining means so long as the socket is empty, and the stem (22) comprises in the vicinity of its pyramidal head (24) means (28) for retracting the retaining means to unlock the pins and sockets (30) for receiving the pins in their position for axial locking of the two shafts with respect to each other to ensure a connection without any angular or axial play.

2. A rapid connection according to claim 1, characterised in that a frustoconical ring (8) slides on the socket under the action of a spring (12) and bears against the outer end of the pins (6).

3. A rapid connection according to claim 1 or 2, comprising an inner ring (14) for retaining the pins in the outer position which can slide inside the socket (2).

4. A rapid connection according to claim 3, characterised in that the stem (22) comprises an outer shoulder (28) which acts as an abutment and drives the slidable inner ring (14).

5. A rapid connection according to any one of the preceding claims, characterised in that the elongated stem (22) comprises a number of circumferential notches (30) each receiving one of the pins (6) in the position for locking and taking up axial and angular play.

6. A rapid connection according to any one of claims 1 to 5, characterised in that the driving block (16) is connected to the socket (1) by splines (18).

7. A rapid connection according to any one of claims 1 to 6, characterised in that the block (16) is in one piece with the socket (12).

8. A rapid connection according to any one of the preceding claims, characterised in that the inclined inner faces (20) of the driving block (16) define a frustum of a pyramid having a triangular base, the pyramidal head (24) of the stem (22) also having a substantially triangular base.

9. A rapid connection according to any one of the preceding claims, characterised in that the frustoconical ring (8) is freely rotatable relative to the socket (1) and includes in the wall thereof, for each locking pin, a helical ramp (35) capable of engaging the head (10) of the corresponding pin so that it radially displaces the pin relative to the notches (30) of the elongated stem (22) when the ring rotates.

10. A rapid connection according to claim 9, characterised in that each helical ramp (35) is formed by a slot in the wall of the frustoconical ring (8), said slot having longitudinal edge portions (34 and 36) which are slightly bent in opposite directions and are respectively slidable under and on the head of a locking pin (6).

11. A rapid connection according to claim 9 or 10, characterised in that the wall of the frustoconical ring (8) forms a longitudinal locking groove (37) facing each of the locking pins.

12. A rapid connection according to claim 11, characterised in that the locking groove (36) terminates close to the small base of the ring, which is extended by a cylindrical annular portion (40).

13. A rapid connection according to claim 11 or 12, characterised in that each of the helical ramps (35) is provided in the space (10) between the pin-locking grooves (37), the end thereof in the vicinity of the small base (40) of the frustoconical ring being close to the corresponding end of one of the locking grooves (37).

EP 0 300 890 B1

**FIG.1**

**FIG.2**

**FIG.5**

8

FIG.3

FIG.4

## FIG.6

## FIG.7

1

35

**FIG.8**

38

8

**FIG.9**

34

38

10

8

35

**FIG.10**

12    36    34

22

**FIG.11**

35

10

1

38

**FIG.12**